# EUROPÄISCHE PATENTSCHRIFT

(11) **EP 1 775 549 B1**
(45) Veröffentlichungstag und Bekanntmachung des Hinweises auf die Patenterteilung: **28.11.2012**
(21) Anmeldenummer: 06121776.6
(22) Anmeldetag: 05.10.2006
(51) Int. Cl.: G01C 9/00, G01C 15/00

(54) **Neigungssteuerungsverfahren**
Inclination control method
Procédé de commande d'inclinaison

(30) Priorität: 17.10.2005 DE 102005000140
(43) Veröffentlichungstag der Anmeldung: 18.04.2007
(73) Patentinhaber: HILTI Aktiengesellschaft, 9494 Schaan (LI)
(72) Erfinder: Waibel, Reinhard, 9442, Berneck (CH); Lukic, Sasha, 9470, Buchs (CH); Kousek, Heinz, 6800, Feldkirch (AT); Ammann, Manfred, 6923, Lauterach (AT)
(74) Vertreter: Wildi, Roland

(56) Entgegenhaltungen:
- EP-A2- 0 854 351

## Beschreibung

Die Erfindung bezeichnet ein Neigungssteuerungsverfahren, insbesondere für selbstnivellierende Baulaser mit auf Schwerkraft basierenden Neigungssensoren wie Röhrenlibellen.

Die Neigung bezeichnet allgemein eine Schieflage oder Abweichung eines Objekts von der normalen Ruhe- oder Gleichgewichtslage, welche durch die Erdbeschleunigung bestimmt ist. Die weiteren Ausführungen beziehen sich auf die Verwendung einer Flüssigkeitslibelle, die ohne Einschränkung des Gegenstandes stellvertretend für auf Schwerkraft basierende Neigungssensoren näher beschrieben wird.

Die in der Messtechnik üblicherweise benutzte Flüssigkeitslibelle (Röhrenlibelle, Dosenlibelle) ist ein mit einer Flüssigkeit und einer Gasblase gefüllter Glas- bzw. Kunststoffhohlkörper. Der Hohlraum, in dem sich Flüssigkeit und eine Gasblase befindet, ist auf der Oberseite leicht mit einem definieren Radius gewölbt, so dass die Gasblase durch ihren Auftrieb immer an der höchsten Stelle aufschwimmt. Elektronische Libellen sind auf Schwerkraft basierende Neigungssensoren mit elektrischem oder elektro-optischem Abgriff der Neigungsmesswerte, deren Messwertfunktion üblicherweise streng linear zum Neigungswinkel ist, wobei der Anstieg der Messwertfunktion die Empfindlichkeit ist.

Reale elektronische Libellen können Ungenauigkeiten und Fehlfunktionen aufweisen, die auf verschiedenste Ursachen zurückzuführen sind und sich überlagern, bspw. Hystereseeffekte bei der Bewegung der Gasblase oder der elektronischen Messwerterfassung, Krümmungsänderung des Hohlraums oder Anlagerung von Schmutzpartikeln an diesem, temperaturbedingte Ausdehnung der Gasblase, zeitbedingter Flüssigkeitsverlust usw. Bei zweckentsprechender Verwendung einer elektronischen Libelle zur selbsttätigen Neigungssteuerung eines Neigungsmittels über einen Neigungssteuerungsalgorithmus, der über ein von diesem gesteuertes Neigungssteuerungsmittel eine Regelschleife ausbildet, kommen zusätzlich noch die Hystereseeffekte und Nichtlinearitäten des Neigungssteuerungsmittels sowie des Neigungssteuerungsalgorithmus hinzu.

Insbesondere bei selbstnivellierenden Baulasern, bspw. nach EP1524495, wird an die Genauigkeit und Zuverlässigkeit der automatisch eingestellten Neigung von projizierten Strahlen oder Ebenen eine hohe Anforderung gestellt, welche zudem hinreichend robust gegenüber dem im Baugewerbe üblichen rauen Umfeld ist.

Nach der EP0136083 weist ein Neigungsüberwachungs- und Alarmsystem eine kapazitiv messbare Röhrenlibelle auf, wobei im Messzweig mittels eines Schwellwertdetektors eine Hysterese zur Vermeidung eines Fehlalarms ausgebildet ist.

Nach der W00128820 ist ein auf Röhrenlibellen basierter Neigungssensor für Fahrzeuge mit einem Mikrocontroller verbunden, welcher über einen Algorithmus aus der detektierten Lage der Gasblase die Neigung bzw. die Beschleunigung berechnet.

Nach der EP0854351 weist ein Lasergerät mit Neigungsverstellung ein Überwachungssystem zur Überwachung des zulässigen Neigungsbereiches auf. Mittels optischer Sensoren, die an einem Gehäuseboden des Lasergerätes anbeordnet sind, wird der zulässige Neigungsbereich überwacht. Bei Überschreiten des zulässigen Neigungsbereiches werden die Verstellmotoren angehalten oder der Bediener wird mittels eines optischen oder akustischen Signals darüber informiert, dass der zulässige Neigungsbereich erreicht ist.

Somit besteht die Aufgabe der Erfindung in der Erhöhung der Zuverlässigkeit von Neigungssteuerungsverfahren mit auf Schwerkraft basierenden Neigungssensoren.

Die Aufgabe wird im Wesentlichen durch die Merkmale des Anspruchs 1 gelöst. Vorteilhafte Weiterbildungen ergeben sich aus den Unteransprüchen.

So weist ein Neigungssteuerungsverfahren einen Neigungssteuerungsschritt zur selbsttätigen Steuerung der Neigung eines Neigungsmittels mittels zumindest einem auf Schwerkraft basierenden elektronischen Neigungssensor und mittels eines Neigungssteuermittels sowie einen Sensortestschritt auf, welcher auf ein von einem Rechenmittel initiiertes Testinitiierungssignal hin selbsttätig ausgeführt wird, wobei der Sensortestschritt einen Linearitätstestschritt aufweist, bei welchem in einem Messschritt mittels des Neigungssteuermittels die Neigung des Neigungsmittels um eine infinitesimale Neigungsänderung, die betragsmäßig kleiner als eine vorgegebene Sollneigungsauflösung ist, geändert und die zugeordnete Messwertänderung des Neigungsmesswertes ermittelt wird und in einem späteren Viergleichsschritt die Messwertänderung mit der infinitesimalen Neigungsänderung verglichen wird, wobei im Falle einer unzulässigen Abweichung der Messwertänderung von der infinitesimalen Neigungsänderung ein Fehlersignal erzeugt wird, welches die Ausführung des Neigungssteuerungsschritts verhindert.

Vorteilhaft wird aus dem Quotienten der Messwertänderung zur Neigungsänderung eine infinitesimale Empfindlichkeit ermittelt und mit einer gegebenen Sollempfindlichkeit des Neigungssensors verglichen. Eine unzulässige Abweichung liegt im Falle einer wesentlich zu kleinen infinitesimalen Empfindlichkeit als auch im Falle einer wesentlich zu großen infinitesimalen Empfindlichkeit vor, was bspw. auf eine unzulässige innere Reibung der Gasblase im Hohlraum hindeutet. An Stelle der infinitesimalen Empfindlichkeit kann auch nur die Messwertänderung als solche mit einem gegebenen Sollbereich verglichen werden.

Durch die Verhinderung der Ausführung des Neigungssteuerungsschritts im Falle einer selbsttätig detektierten Fehlfunktion wird die zweckbedingte Nutzung des Neigungssteuerungsverfahrens unmöglich, wodurch eine fehlerhafte Neigungssteuerung unterbunden wird. Durch diese offensichtliche Funktionsunfähigkeit wird der Nutzer direkt über eine allfällige Fehlfunktion informiert.

Vorteilhaft wird während des Neigungssteuerungsschrittes die bis zur selbsttätigen Einnivellierung benötigte Regelzeitdauer erfasst und bei einem Überschreiten einer Grenzdauer das Fehlersignal ausgelöst.

Vorteilhaft wird der Sensortestschritt selbstständig während der normalen zweckgemäßen Verwendung des Neigungsmittels ausgeführt, insbesondere im einnivellierten Zustand, wodurch dieser ohne Funktionsbeeinträchtigung erfolgt.

Vorteilhaft wird der Messschritt mehrfach wiederholt und dabei die Messwertänderung sowie optional die Neigungsänderung aufakkumuliert, wodurch stochastische Fehler, bspw. durch äußere Erschütterungen verursacht, und somit unbegründete Fehlersignale vermieden werden.

Vorteilhaft erfolgt der Sensortestschritt punktuell von der aktuellen Neigung des Neigungsmittels aus mit infinitesimalen Neigungsänderungen, die betragsmäßig kleiner als die vorgegebene Sollneigungsauflösung des Neigungssteuerungsalgorithmus sind, in die positive Richtung und in die negative Richtung, wodurch eine Richtungsabhängigkeit der Linearität des Regelkreises einschließlich der Messwertfunktion bei der aktuellen Neigung geprüft ist. Dieser punktuelle Sensortestschritt kann insbesondere selbsttätig wiederholt während der zweckentsprechenden Nutzung durchgeführt werden, ohne diese zu stören. Vorteilhaft umfasst eine Folge von bei verschiedenen, weiter vorteilhaft streng monoton geänderten, Neigungen durchgeführten Sensortestschritten den gesamten sensitiven Neigungsbereich des Neigungssensors, wodurch die Linearität des Regelkreises einschließlich der Messwertfunktion des Neigungssensors insgesamt geprüft ist.

Vorteilhaft wird die Folge von Sensortestschritten über den gesamten sensitiven Neigungsbereich des Neigungssensors in der positiven Richtung und in der negativen Richtung durchgeführt, wodurch eine Richtungsabhängigkeit der Linearität des Regelkreises einschließlich der Messwertfunktion der des Neigungssensors insgesamt geprüft ist. Dieser integrale Sensortestschritt kann insbesondere selbsttätig während eines vorgelagerten Initialisierungsschrittes des Neigungssteuerungsverfahrens durchgeführt werden.

Vorteilhaft wird ein derartiges Neigungssteuerungsverfahren bei einem auf Schwerkraft basierenden elektronischen Neigungssensor verwendet, der als Röhrenlibelle ausgebildet ist, wodurch eine hohe Messgenauigkeit erzielt ist.

Vorteilhaft wird ein derartiges Neigungssteuerungsverfahren bei einem Neigungssteuerungsalgorithmus eines Rechenmittels eines Baulasers verwendet, wodurch dessen Neigungsstabilität und Zuverlässigkeit erhöht wird.

Die Erfindung wird bezüglich eines vorteilhaften Ausführungsbeispiels näher erläutert mit:
Fig. 1 als Schema der Neigungssteuerung
Fig. 2 als Neigungssteuerungsalgorithmus

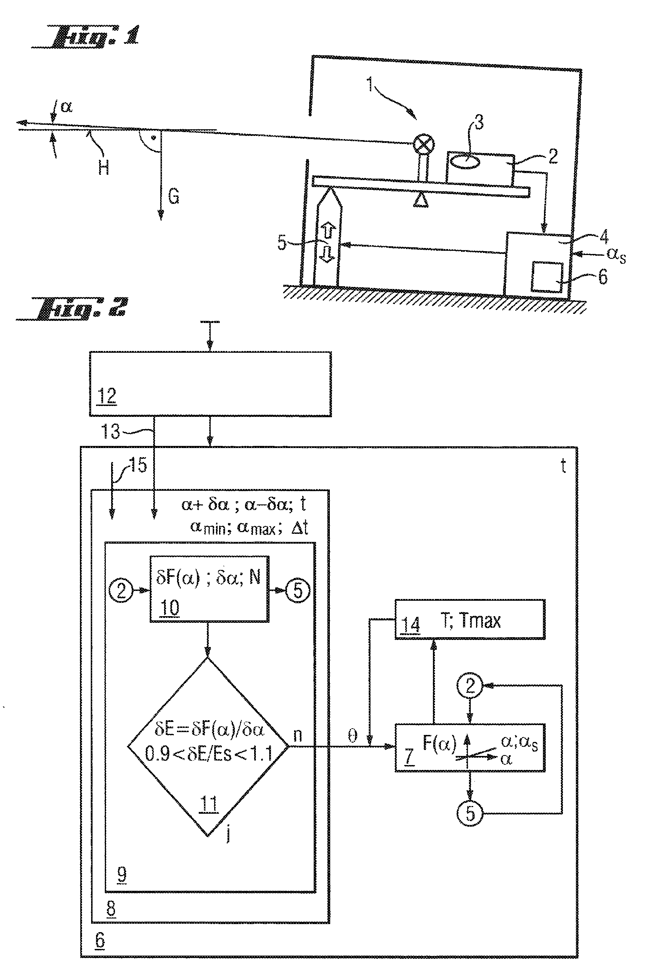

Nach Fig. 1 wird in einem elektronischen Regelkreis die Neigung a eines Neigungsmittels 1 in Form der Lasereinheit eines Baulasers mit einem daran angeordneten auf Schwerkraft G basierenden Neigungssensor 2 in Form einer elektronischen Röhrenlibelle mit einer Gasblase 3 mittels eines Rechenmittels 4 in Form eines Mikrocontrollers und eines Neigungssteuermittels 5 in Form eines Servomotors selbsttätig auf eine vorgegebene Sollneigung αₛ zur Horizontalen H eingeregelt. Das Rechenmittel 4 enthält dazu einen programmierten Neigungssteuerungsalgorithmus 6.

Nach Fig. 2 weist der zur Durchführung des Neigungssteuerungsverfahrens durch das Rechenmittel 4 (Fig. 1) geeignete Neigungssteuerungsalgorithmus 6 einen Neigungssteuerungsschritt 7 zur selbsttätigen Steuerung der Neigung a auf die vom Nutzer vorgegebene Sollneigung αₛ sowie einen Sensortestschritt 8 auf. Der Sensortestschritt 8 wird auf ein vom Rechenmittel 4 (Fig. 1) regelmäßig während der normalen Verwendung initiiertes Testinitiierungssignal 15 hin selbsttätig ausgeführt und liefert im Falle einer Fehlfunktion ein Fehlersignal θ, welches die Ausführung des Neigungssteuerungsschritts 7 verhindert, wodurch die zweckbedingte Nutzung des Neigungssteuerungsalgorithmus 6 unmöglich und der Nutzer direkt über eine allfällige Fehlfunktion informiert wird. Der Sensortestschritt 8 weist einen Linearitätstestschritt 9 auf, bei welchem in einem Messschritt 10 mittels des proportional angesteuerten Neigungssteuermittels 5 (Fig. 1) die Neigung a des Neigungsmittels 1 (Fig. 1) infinitesimal um δα geändert und die zugeordnete Messwertänderung δF(α) des Neigungsmesswertes F(a) ermittelt wird. Der Messschritt wird N-fach wiederholt und dabei die Messwertänderung δF(α) und die Neigungsänderung δα aufakkumuliert. In einem späteren Vergleichsschritt 11 wird aus dem Quotienten der Messwertänderung δF(α) zur angesteuerten Neigungsänderung δα die infinitesimale Empfindlichkeit δE ermittelt und mit einer gegebenen integralen Sollempfindlichkeit Es des Neigungssensors 2 (Fig. 1), verglichen, wobei ein Empfindlichkeitsbereich 0.9 < δE / Eₛ < 1.1 zulässig ist. im Falle einer unzulässigen Abweichung wird das Fehlersignal θ erzeugt. Während der zweckentsprechenden Nutzung im selbstnivellierten Zustand erfolgt der Sensortestschritt 8 periodisch nach einer Zeitdauer Δt einmal je min punktuell von der aktuellen Neigung α aus mit infinitesimalen Neigungsänderungen δα, welche betragsmäßig kleiner als die gegebene Sollneigungsauflösung des Neigungssteuerungsalgorithmus 6 sind, in die positive Richtung α + δα und in die negative Richtung a - δα. Während eines dem Neigungssteuerungsalgorithmus vorgelagerten Initialisierungsschrittes 12 wird zudem auf einen Testbefehl 13 hin in der positiven und negativen Neigung je eine Folge von bei verschiedenen, sich streng monoton ändernden, Neigungen α durchgeführten Sensortestschritten 8 ausgeführt, welche den gesamten sensitiven Neigungsbereich von aₘᵢₙ bis αₘₐₓ des Neigungssensors 2 umfassen. Zudem wird in einem Zeitmessschritt 14 die bis zur selbsttätigen Einnivellierung benötigte Regelzeitdauer T während jedes Neigungssteuerungsschrittes 7 erfasst und bei einem Überschreiten einer Grenzdauer Tₘₐₓ das Fehlersignal θ ausgelöst.

## Patentansprüche

1. Neigungssteuerungsverfahren mit einem Neigungssteuerungsschritt (7) zur selbsttätigen Steuerung der Neigung (α) eines Neigungsmittels (1) mittels zumindest einem auf Schwerkraft (G) basierenden elektronischen Neigungssensor (2) und mittels eines Neigungssteuermittels (5), **dadurch gekennzeichnet, dass** ein Sensortestschritt (8) von einem Rechenmittel (4) auf ein von dem Rechenmittel (4) initiierte Testinitüerungssignal (15) hin selbsttätig ausgeführt wird, wobei der Sensortestschritt (8) einen Linearitätstestschritt (9) aufweist, bei welchem in einem Messschritt (10) mittels des Neigungssteuermittels (5) die Neigung (α) des Neigungsmittels (1) um eine infinitesimale Neigungsänderung (δα), die betragsmäßig kleiner als eine vorgegebene Sollneigungsauflösung ist, geändert und die zugeordnete Messwertänderung (δF(α)) des Neigungsmesswertes (F(α)) ermittelt wird und in einem späteren Vergleichsschritt (11) die Messwertänderung (δF(α)) mit der infinitesimalen Neigungsänderung (δα) verglichen wird, wobei im Falle einer unzulässigen Abweichung der Messwertänderung (δF(α)) von der infinitesimalen Neigungsänderung (δα) ein Fehlersignal (θ) erzeugt wird welches die Ausführung des Neigungssteuerungsschritts (7) verhindert.

2. Neigungssteuerungsverfahren nach Anspruch 1, **dadurch gekennzeichnet, dass** während des Neigungssteuerungsschrittes (7) die bis zur selbsttätigen Einnivellierung benötigte Regelzeitdauer (T) erfasst und bei einem Überschreiten einer Grenzdauer (Tₘₐₓ) das Fehlersignal (θ) ausgelöst wird.

3. Neigungssteuerungsverfahren nach Anspruch 1 oder 2, **dadurch gekennzeichnet, dass** der Sensortestschritt (8) selbstständig während der normalen zweckgemässen Verwendung des Neigungsmittels (1) ausgeführt wird.

4. Neigungssteuerungsverfahren nach einem der Ansprüche 1 bis 3, **dadurch gekennzeichnet, dass** der Messschritt (10) mehrfach wiederholt und dabei die Messwertänderung (δF(α)) aufakkumuliert wird.

5. Neigungssteuerungsverfahren nach einem der Ansprüche 1 bis 4, **dadurch gekennzeichnet, dass** der Sensortestschritt (8) punktuell von der aktuellen Neigung (α) des Neigungsmittels (1) aus mit infinitesimalen Neigungsänderungen (δα), die betragsmäßig kleiner als die vorgegebene Sollneigungsauflösung sind, in die positive Richtung (α + δα) und in die negative Richtung (a - δα) erfolgt.

6. Neigungssteuerungsverfahren nach Anspruch 5, **dadurch gekennzeichnet, dass** eine Folge von bei verschiedenen Neigungen (α) durchgeführten Sensortestschritten (8) den gesamten sensitiven Neigungsbereich (αₘᵢₙ bis αₘₐₓ) des Neigungssensors (2) umfasst.

7. Neigungssteuerungsverfahren nach Anspruch 6, **dadurch gekennzeichnet, dass** die Folge von Sensortestschriften (8) in die positive Richtung (α + δα) und in die negative Richtung (α-δα) durchgeführt wird.

8. Neigungssteuerungsverfahren nach einem der Ansprüche 1 bis 7, **dadurch gekennzeichnet, dass** dieses bei einem auf Schwerkraft (G) basierenden elektronischen Neigungssensor (2) verwendet wird, der als Röhrenlibelle ausgebildet ist.

9. Verwendung eines Neigungssteuerungsverfahrens nach einem der Ansprüche 1 bis 8 bei einem Neigungssteuerungsalgorithmus (6) eines Rechenmittels (4) eines Baulasers.

## Claims

1. Inclination control method with an inclination control stage (7) for automatic control of the inclination (α) of an inclination means (1) by means of at least one gravity (G) based electronic inclination sensor (2) and by means of an inclination control means (5), **characterized in that** a sensor test stage (8) is executed automatically by a computing means (4) on a test initiation signal (15) initiated by the computing means (4), the sensor test stage (8) comprising a linearity test stage (9) in which in a measuring stage (10) the inclination (α) of the inclination means (1) is modified by means of the inclination control means (5) by an infinitesimal change in inclination (δα) that is smaller in magnitude than a specified inclination resolution, and the concomitant change (δF(α)) in the measured inclination value (F(α)) is determined, and in a subsequent comparison stage (11) the change in measured value (δF(α)) is compared with the infinitesimal change in inclination (δα) and if there is an unacceptable deviation of the change in measured value (δF(α)) from the infinitesimal change in inclination (δα), an error signal (θ) is generated which prevents the inclination control stage (7) from being executed.

2. Inclination control method according to Claim 1, **characterized in that** during the inclination control stage (7) the recovery time (T) required for automatic levelling is detected, and the error signal (θ) is triggered if a time limit (Tₘₐₓ) is exceeded.

3. Inclination control method according to Claim 1 or Claim 2, **characterized in that** the sensor test stage (8) is executed automatically during use of the inclination means (1) for its normal intended purpose.

4. Inclination control method according to any one of Claims 1 to 3, **characterized in that** the measuring stage (10) is repeated several times and the change in measured value (δF(α)) is accumulated.

5. Inclination control method according to any one of Claims 1 to 4, **characterized in that** the sensor test stage (8) is conducted selectively starting from the present inclination (α) of the inclination means (1) with infinitesimal changes in inclination (δ α) that are smaller in magnitude than the specified inclination resolution, in the positive direction (α + δ α) and in the negative direction (α - δ α).

6. Inclination control method according to Claim 5, **characterized in that** the series of sensor test stages (8) carried out at different inclinations (α) covers the entire sensitive inclination range (αₘᵢₙ to αₘₐₓ₎ of the inclination sensor (2).

7. Inclination control method according to Claim 6, **characterized in that** the series of sensor test stages (8) is carried out in the positive direction (α + δ α) and in the negative direction (α - δ α).

8. Inclination control method according to any one of Claims 1 to 7, **characterized in that** it is used with a gravity (G) based electronic inclination sensor (2) configured as a spirit level.

9. Use of an inclination control method according to any one of Claims 1 to 8 with an inclination control algorithm (6) of a computing means (4) of a builder's laser.

## Revendications

1. Procédé de commande d'inclinaison comportant une étape de commande d'inclinaison (7) pour commander automatiquement l'inclinaison (α) de moyens d'inclinaison (1) au moyen d'au moins un capteur d'inclinaison électronique (2) basé sur la force de gravité (G) et au moyen de moyens de commande d'inclinaison (5), **caractérisé en ce qu'**une étape de test de capteur (8) est exécutée automatiquement par des moyens de calcul (4) sur un signal de déclenchement de test (15) déclenché par les moyens de calcul (4), dans lequel l'étape de test de capteur (8) comporte une étape de test de linéarité (9), pendant laquelle l'inclinaison (α) des moyens d'inclinaison (1) est changée d'une quantité de variation d'inclinaison (δα) infinitésimale au cours d'une étape de mesure (10) au moyen des moyens de commande d'inclinaison (5), laquelle quantité est inférieure à une résolution d'inclinaison de consigne prédéfinie, et la variation de valeur de mesure associée (δF(α)) de la valeur de mesure d'inclinaison (F(a)) est déterminée, et pendant une étape de comparaison (11) ultérieure, la variation de valeur de mesure (δF(α)) est comparée à la quantité infinitésimale de variation d'inclinaison (δα), dans lequel un signal d'erreur (θ) est généré en cas de déviation inadmissible de la variation de valeur de mesure (δF(α)) par rapport à la quantité infinitésimale de variation d'inclinaison (δα), lequel signal empêche l'exécution de l'étape de commande d'inclinaison (7).

2. Procédé de commande d'inclinaison selon la revendication 1, **caractérisé en ce que** pendant l'étape de commande d'inclinaison (7), la durée de réglage (T) requise jusqu'au nivellement automatique est déterminée, et le signal d'erreur (θ) est déclenché lorsqu'une durée limite (Tₘₐₓ) est dépassée.

3. Procédé de commande d'inclinaison selon la revendication 1 ou 2, **caractérisé en ce que** l'étape de test de capteur (8) est exécutée automatiquement pendant l'utilisation fonctionnelle normale des moyens d'inclinaison (1).

4. Procédé de commande d'inclinaison selon l'une quelconque des revendications 1 à 3, **caractérisé en ce que** l'étape de mesure (10) est répétée plusieurs fois et la variation de valeur de mesure (δF(α)) est ainsi accumulée.

5. Procédé de commande d'inclinaison selon l'une quelconque des revendications 1 à 4, **caractérisé en ce que** l'étape de test de capteur (8) est effectuée ponctuellement à partir de l'inclinaison (α) actuelle des moyens d'inclinaison (1) avec les quantités infinitésimales de variation d'inclinaison (δα) dont la valeur est inférieure à la résolution d'inclinaison de consigne prédéfinie, dans la direction positive (α + δα) et dans la direction négative (α - Sa).

6. Procédé de commande d'inclinaison selon la revendication 5, **caractérisé en ce qu'**une série d'étapes de test de capteur (8) exécutées à différentes inclinaisons (α) inclut la plage d'inclinaison sensible complète (αₘᵢₙ à αₘₐₓ) du capteur d'inclinaison (2).

7. Procédé de commande d'inclinaison selon la revendication 6, **caractérisé en ce que** la séquence d'étapes de test de capteur (8) est exécutée dans la direction positive (α + δα) et dans la direction négative (α - δα) .

8. Procédé de commande d'inclinaison selon l'une quelconque des revendications 1 à 7, **caractérisé en ce qu'**un capteur d'inclinaison électronique (2) basé sur la force de gravité (G) est utilisé, lequel capteur est configuré comme un niveau tubulaire à bulle d'air.

9. Utilisation d'un procédé de commande d'inclinaison selon l'une quelconque des revendications 1 à 8, dans un algorithme de commande d'inclinaison (6) de moyens de calcul (4) d'un laser de construction.
